# EUROPEAN PATENT SPECIFICATION

(11) **EP 3 945 020 B1**
(45) Date of publication and mention of the grant of the patent: **16.08.2023**
(21) Application number: 21186540.7
(22) Date of filing: 20.07.2021
(51) Int. Cl.: B64U 30/20, B64U 50/13, B64U 50/19, B64U 50/34, B64U 101/60, B64C 39/02, B64D 1/12, B64D 1/22, B64D 9/00

(54) **CARRYING DRONE CONNECTED PALLET**
MIT EINER TRAGDROHNE VERBUNDENE PALETTE
PALETTE DE DRONE DE TRANSPORT CONNECTÉE

(30) Priority: 30.07.2020 KR 20200094902
(43) Date of publication of application: 02.02.2022
(73) Proprietor: Kim, Jaemo, Jeju-do (KR)
(72) Inventor: Kim, Jaemo, Jeju-do (KR)
(74) Representative: Fortuna, Jevgenijs

(56) References cited:
- CN-A- 111 114 787
- DE-A1-102017 216 681
- KR-A- 20160 014 328
- KR-B1- 102 115 099

## Description

### Technical Field

The present invention relates to a pallet used to carry, unload, store, and fix goods (cargo, luggage) and particularly, to a pallet for connection with a carrying drone when carrying the goods using the carrying drone.

### Background Art

A drone refers to an airplane or helicopter-shaped flight vehicle flying by the induction of radio waves without a person. The drone is becoming increasingly used in a variety of fields, unlike the initial use, which has been developed and used for military purposes, and recently, the area of the drones has been expanded to a courier service that directly conveys the goods to consumers.

One of the fields of getting the limelight for the use of the drones is a delivery field of goods. If a delivery system using carrying drones is constructed in a delivery place within a certain distance in a logistics center, it is possible to overcome the spatial constraints and perform a faster delivery. America's Amazon has succeeded in the demonstration of Prime Air Service using carrying drones and the efforts of companies to realize drone delivery such as patent application are being embodied.

However, the carrying drone should be a structure that may withstand events (flight speed, external environmental factors, etc.) that may be generated during flight while the goods are loaded.

That is, the carrying drones which have been currently used have a structure which is flying by mounting the goods on a fixing portion of a drone body or fastening a separate goods loading device to the drone body and then carrying the goods in the loading device. However, the carrying drones have a problem of physical fastening of the fixing device in the flying process or a risk to a falling possibility of goods due to external environment factors.

In addition, since a battery of the carrying drone can not be efficiently managed, there was a problem that the battery may be fully consumed when an unexpected event occurred during carrying and the delivery will be delayed.

### Prior Art

There is known a distribution drones and a delivery system for loading a delivery article on an article loading section formed as an empty space in a base portion (KR 102100437).

There is known carrying drone system (KR 102018090).

There is known load fixing apparatus for pallet (KR 102115099).

There is known automatic unloading carrier for unmanned aerial vehicle (CN111114787A).

There is known transport system (DE102017216681).

### Disclosure

The present invention is derived to solve the above problems, and an object of the present invention is to provide a pallet for connection with a carrying drone when carrying goods by using the carrying drone.

Another object of the present invention is to provide a pallet capable of stably fixing loaded cargo when carrying goods by using the carrying drone.

Yet another object of the present invention is to provide a pallet having a fixing device which stably fixes the fastening with a carrying drone while stably fixing loaded cargo so as to prevent a falling risk of goods due to a flight speed and external environment factors when the carrying drone flies while fastening the goods.

Still another object of the present invention is to provide a pallet including a power supply unit (battery) providing power to a carrying drone.

Still another object of the present invention is to provide a pallet in which a power supply unit (battery) is chargeable while the pallets including the power supply unit (battery) are stacked.

Still another object of the present invention is to provide a pallet including a power supply unit to prevent an adapter jack provided in a carrying drone combined with a power connector of the power supply unit provided in the pallet from being separated due to a flight speed and external environment factors during flying.

Still another object of the present invention is to provide a pallet in which a power supply unit inserted to the pallet is detachable and the power supply unit is chargeable while the detached power supply unit is stacked.

The objects of the present invention are not limited to the above-mentioned objects, and other objects and advantages of the present invention, which are not mentioned, will be understood through the following description, and will become apparent from the embodiments of the present invention. In addition, it will be appreciated that the objects and advantages of the present invention will be easily realized by those skilled in the art based on the appended claims and a combination thereof.

According to the present invention to achieve the object, an assembly according to claim 1 is provided.

Further aspects of the assembly are as defined by dependent claims 2-4.

The assembly according to the invention provides the following effects.

First, it is possible to stably fix the fastening with the carrying drone while stably fixing loaded cargo so as to prevent a falling risk of goods due to a flight speed and external environment factors during flight when the goods are carried by using the carrying drone.

Second, since the power supply unit for providing the power to the carrying drone is provided in the pallet to provide the power to the carrying drone, it is possible to stably provide the power while flying the carrying drone and enable the long-distance carrying using the carrying drone.

Third, the grip portion is configured to prevent the adapter jack provided in the carrying drone coupled with the power connector of the power supply unit provided in the pallet from being separated due to a flight speed and external environment factors during flight.

Fourth, since the power supply unit is chargeable while the pallets including the power supply units or the power supply units detached from the pallets are stacked, it is possible to simply and efficiently charge, store, and manage the power supply unit.

Fifth, since the components are configured so as not to protrude from the upper surface of the pallet or the power supply unit to stably stack the pallets or the power supply units, it is easy to store and manage the pallet or the power supply unit.

In addition to the above-described effects, specific effects of the present invention will be described together with explanation of specific matters for carrying out the present invention.

### Description of Drawings

FIG. 1 is a configuration diagram illustrating a configuration of a carrying drone connected pallet according to an embodiment of the present invention.
FIG. 2 is a configuration diagram illustrating a lateral cross-sectional view of a draw in/out portion in detail in a luggage fixing device for the pallet of FIG. 1.
FIG. 3 is a configuration diagram illustrating a front cross-sectional view of the draw in/out portion in detail in the luggage fixing device for the pallet of FIG. 1.
FIG. 4 is a configuration diagram illustrating the configuration of the grip portion of FIG. 1 in detail.
FIG. 5 is a configuration diagram illustrating a configuration of carrying goods by a carrying drone by using the carrying drone connected pallet according to the embodiment of the present invention.
FIG. 6 is a configuration diagram illustrating a configuration in which the grip portion of FIG. 5 is fastened with an adapter jack in detail.
FIG. 7A is a diagram illustrating a connection port separated by releasing a bolt from the luggage fixing device between a connection member 310 and a support 200 in the carrying drone connected pallet of FIG. 1.
FIG. 7B is a diagram schematically illustrating an automatic winding unit of the luggage fixing device of FIG. 7A.
FIG. 8 is a diagram schematically illustrating a state in which a roller member is rotated forward while a pressing member of FIG. 7A is rotated at about 45°C around the roller member.
FIG. 9 is a diagram schematically illustrating a state in which the roller member is further rotated forward while the pressing member of FIG. 8 is further rotated around the roller member.
FIG. 10 is a diagram schematically illustrating a state in which the roller member can be rotated backward and the tension of a strap is released while the pressing member and the fixing member of FIG. 9 stop by a tension release unit.
FIG. 11 is a diagram schematically illustrating a state in which a forward rotation allowable member is locked to any one backward locking groove and a state in which a forward rotation transmission member is locked to the other backward locking groove.
FIG. 12 is a diagram schematically illustrating a state in which the forward rotation allowable member is retracted in an approximately longitudinal direction to a fixing member over a forward rotation guide protrusion while the pressing member is rotated forward while the forward rotation transmission member is locked to the backward locking groove.
FIG. 13 is a diagram schematically illustrating a state in which the forward rotation transmission member is retracted in an approximately longitudinal direction to the pressing member over the forward rotation guide protrusion while the pressing member is rotated backward while the forward rotation allowable member is locked to the backward locking groove.
FIG. 14 is a diagram schematically illustrating a state in which the forward rotation allowable member is retracted by a cam portion and the forward rotation transmission member is retracted and stopped by a stop portion to be separated from the backward locking groove so that the roller member is rotated backward to release the tension of a strap.

### Modes for the Invention

Other objects, features and advantages of the present invention will be apparent from the detailed description of embodiments with reference to the accompanying drawings.

Terms used in the present invention adopt general terms which are currently widely used as possible by considering functions in the present invention, but the terms may be changed depending on an intention of those skilled in the art, a precedent, emergence of new technology, etc. Further, in a specific case, a term arbitrarily selected by an applicant is present and in this case, a meaning of the term will be disclosed in detail in a corresponding description part of the present invention. Accordingly, a term used in the present invention should be defined based on not just a name of the term but a meaning of the term and contents throughout the present invention.

A preferred embodiment of a carrying drone connected pallet according to the present invention will be described below with reference to the accompanying drawings. However, the present invention is not limited to embodiments disclosed below but embodied in many different forms, and the present embodiments are merely to be provided to complete the disclosure of the present invention and fully inform those skilled in the art. Therefore, the embodiments described in the present specification and the configurations illustrated in the drawings are merely the most preferred embodiment of the present invention and are not intended to represent all of the technical ideas of the present invention. The scope of the invention is defined by the appended claims.

Hereinafter, the fact that an arbitrary configuration is disposed at the "upper (or lower)" of the component or "on (or below)" the component may mean that not only that an arbitrary component is disposed in contact with an upper surface (or lower surface) of the component, but also that other components may be interposed between the component and any component disposed on (or below) the component.

In addition, when a component is described as being "connected", "coupled" or "accessed" to another component, it will be understood that the components may be directly connected or accessed to each other, but other components are "interposed" between the components, or each component may be "connected", "coupled" or "accessed" through other components.

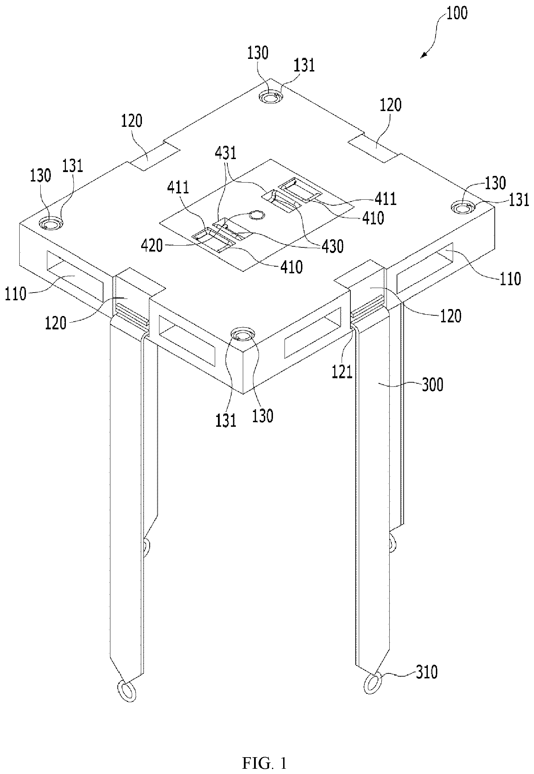

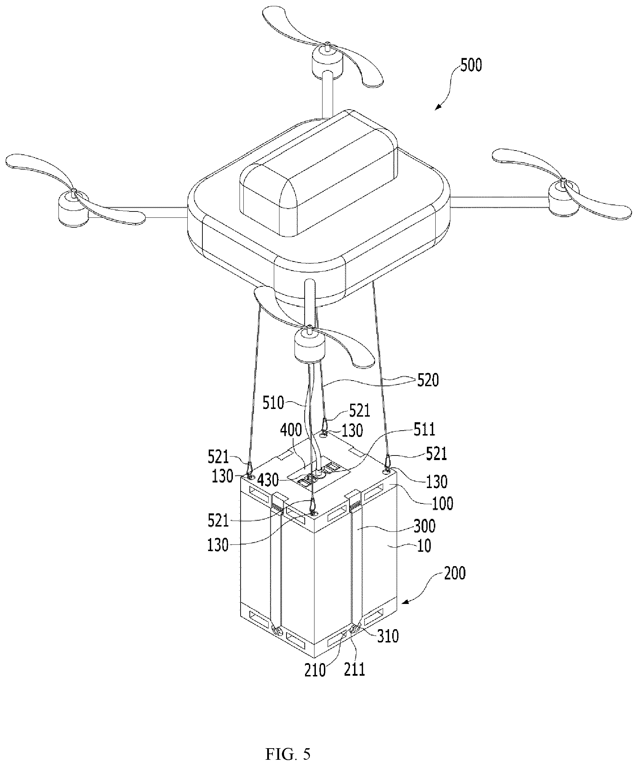

FIG. 1 is a configuration diagram illustrating a configuration of a carrying drone connected pallet according to an embodiment of the present invention and FIG. 5 is a configuration diagram illustrating a configuration of carrying goods by a carrying drone by using the carrying drone connected pallet according to the embodiment of the present invention. A carrying drone connected pallet 100 and a carrying drone 500 illustrated in FIGS. 1 and 5 are just in accordance with an embodiment, and components thereof are not limited to the embodiment illustrated in FIGS. 1 and 5, and as necessary, some components may be added, modified, or deleted.

As illustrated in FIG. 1, the carrying drone connected pallet 100 of the present invention includes a body part which presses and supports goods 10 loaded on a support plate 200 from the top, connects and fixes the goods 10 with the support plate 200 up and down through a strap 300, and has a fastening port 130 to be fastenable to a carry drone 500, and a power supply unit 400 which is embedded in a partial region of the body to provide power to the carrying drone 500 connected to a power cable 510.

The body part may have the same size and shape as the support plate 200 in an approximately rectangular parallelepiped plate as a configuration for pressing the goods 10 by locating the goods 10 loaded on the support plate 200. The body part has a plate shape having flat upper and lower surfaces to be in close contact with each other even if the other body part is adjacent to the upper/lower surface and be stably stacked, so that a storage space may be minimally used. The body part may be formed of a weight material of about 10 to 30 kg so that the goods 10 are not easily blown with the wind or the like even while the goods 10 are loaded and then not connected and fixed with the support plate 200 through the strap or the like.

The body part includes a fork insertion hole 110, a connection port 120, and a fastening port 130.

The fork insertion hole 110 is a component that is provided on a circumferential surface of the body part so that a fork of a forklift (not illustrated) may be inserted. As an example, the fork insertion hole 110 may be formed with at least two or more holes on four side surfaces as the circumference of the body part. The fork insertion hole 110 may be used when the body part is loaded on the upper surface of the goods 10 using the forklift.

The connection port 120 is a component that connects and fixes the support plate 200 on which the goods 10 are loaded and the body part to each other. The connection port 120 may be formed on at least two side surfaces of the four side surfaces as the circumference of the body part.

The connection port 120 includes a strap 300 and may include a draw in/out portion 121 and a connection member 310.

The draw in/out portion 121 is a component for drawing in/out the strap 300.

In addition, the strap 300 has a length which may be long drawn out to the support plate 200 and may be drawn in/out from the draw in/out portion 121. At this time, the strap 300 may be fixedly coupled to the draw in/out portion 121 and may be configured to be drawn in/out through the draw in/out portion 121. Accordingly, while the strap 300 is used, the strap 300 may be used to be drawn out from the draw in/out portion 121, and when the use of the strap 300 is completed, the strap 300 is drawn in to the draw in/out portion 121 to prevent the interference with peripheral members and be received and stored in the connection port 120 without entanglement of the strap 300.

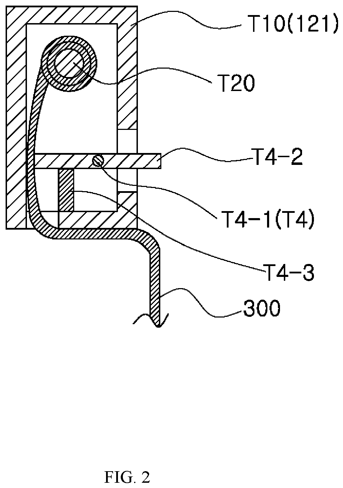

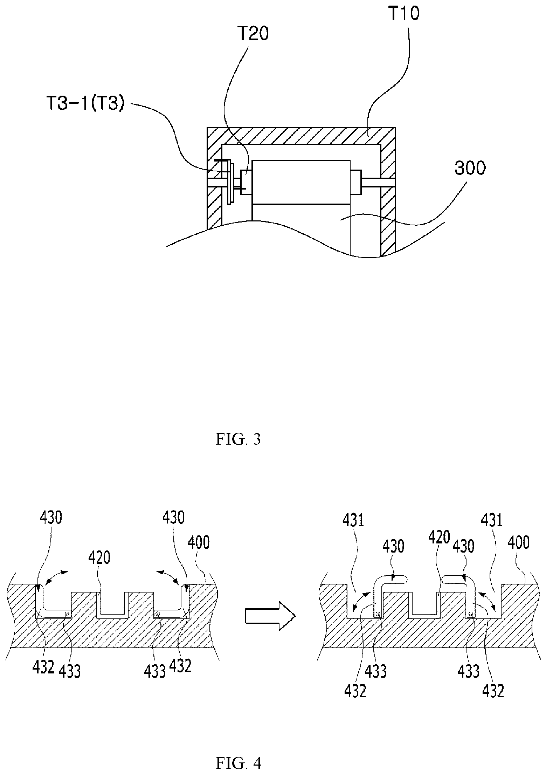

FIG. 2 is a configuration diagram illustrating a lateral cross-sectional view of a draw in/out portion in detail in a luggage fixing device for the pallet of FIG. 1 and FIG. 3 is a configuration diagram illustrating a front cross-sectional view of the draw in/out portion in detail in the luggage fixing device for the pallet of FIG. 1.

As illustrated in FIGS. 2 and 3, the draw in/out portion 121 may include a fixing member T10, a roller member T20, a position restoring member T3, and a stop portion T4.

The fixing member T10 may form an exterior of the draw in/out portion 121 and may be provided in the body part, and the roller member T20 may be rotatably provided on the fixing member T10 and wind or unwind the strap 300 while rotating in different directions. The position restoring member T3 may be provided between the fixing member T10 and the roller member T20 and provide a rotating force (restoring force) to the roller member T20 so that the strap 300 is wound again as much as the strap 300 is unwound, and the stop portion T4 may stop the movement of the strap 300 by applying a friction force of the strap 300.

At this time, the position restoring member T3 may be a recoil spring or spiral spring (that is, a torsional spring wound with a spiral shape (not illustrated)). For example, one end of a recoil spring T3-1 may be fixed to the fixing member T10 and the other end of the recoil spring T3-1 may be fixed to the roller member T20. Therefore, while the strap 300 is pulled and the roller member T20 is rotated forward, the restoring force may be increased, and when the strap 300 is released, the strap 300 may be automatically wound while the roller member T20 is rotated backward by the restoring force.

In addition, the stop portion T4 may include a hinge shaft T4-1 and a friction member T4-2. The hinge shaft T4-1 may be provided in the fixing member T10. The friction member T4-2 may be rotatably provided through the hinge shaft T4-1, and when the friction member T4-2 is rotated to be in contact with the strap 300, the movement of the strap 300 may be stopped by friction. In particular, the fixing member T10 may further include a rotation prevention protrusion T4-3 to stop the rotation of the friction member T4-2 so that the friction member T4-2 is not rotated any longer in a draw-in direction of the strap 300 when the friction member T4-2 is in contact with the strap 300.

The connection port 120 may be configured on the front surface, the rear surface, the left side surface, and the right side surface of the body part in which each strap 300 drawn out through the draw in/out portion 121 has a rectangular parallelepiped plate, respectively. Through this, it is possible to safely grip the goods 10 at four sides and prevent the goods 10 from collapsing down to any one side.

In addition, the strap 300 may have a thin, wide and long shape. Therefore, even if the other pallet 100 is adjacent to the side, it is possible to minimize the interference therewith. Then, it is possible to provide a sufficient friction surface through a wide surface of the strap 300, and prevent the strap 300 from being moved to the left and right.

In addition, the connection member 310 may be provided at the end of the strap 300, and when the strap 300 is drawn out to the support plate 200, the connection member 310 may be connected and coupled to a fixing port 211 provided separately at the support plate 200. As an example, the connection member 310 may be used for a ring-shaped connection ring. In addition, the fixing port 211 is located inside the insertion hole 210 configured in the support plate 200, and a hooked connection hook or the like of which an end is curved in a lower direction may be used to hook the connection ring of the connection member 310.

However, the connection member 310 may be made in various embodiments, depending on the fixing port 211 provided separately to the support plate 200, and in addition, when the fixing port 211 provided separately to the support plate 200 is not provided, the facing straps 300 may be connected and fixed to each other.

The fastening port 130 is a component in which at least two fastening ports are provided on one side of the body part to be fastened to the carrying drone 500. As an example, the fastening port 130 may be provided on one side of the upper end of the body part, and a looped connection ring or the like may be used so as to be connected with a buckle 521 provided at an end of a wire 520 fixed to the carrying drone 500.

Meanwhile, as illustrated in FIG. 1, the body part further includes a first receiving portion 131 provided on a circumferential surface of the fastening port 130 in a groove shape in which the fastening port 130 may be received. The fastening port 130 may be received inside the first receiving portion 131 so as not to protrude from the upper surface of the body part.

Therefore, even if the pallet 100 is stacked by stacking the other pallet to the top, the interference due to the fastening port 130 may be minimized so that the body parts may be in close contact with each other on upper/lower surfaces to be stably stacked. It is easy to store and manage a plurality of pallets.

The power supply unit 400 is a component which is embedded in a partial region of the body part to provide power to the carrying drone 500 connected to the power cable 510. The power supply unit 400 may include a power connector 420 to which an adaptor jack 511 of the power cable 510 electrically or mechanically connected with the carrying drone 500 is inserted, and a grip portion 430 which is fixed rotatably to the peripheral portion of the power connector 420 to grip the adapter jack 511 connected to the power connector 420.

At this time, the power supply unit 400 may be used as auxiliary power for providing additional power to the carrying drone 500, and preferably, may consist of a battery. The battery may consist of a fuel cell including a hydrogen fuel cell charging hydrogen fuel as well as secondary batteries including a lead-acid battery, a lithium-ion battery, and the like capable of charging and discharging. However, the types of batteries to be used are not limited thereto, and various types of known batteries all may be used.

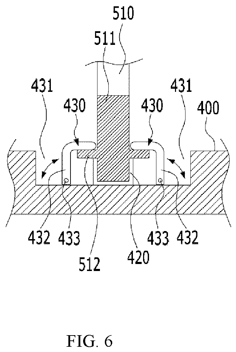

FIG. 4 is a configuration diagram illustrating the configuration of the grip portion of FIG. 1 in detail and FIG. 6 is a configuration diagram illustrating a configuration in which the grip portion of FIG. 5 is fastened with the adapter jack in detail.

As illustrated in FIG. 4, the grip portion 430 may include at least one latch 432 having a ' 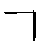 ' shape at positions facing each other based on the power connector 420, and a hinge 433 which rotatably fixes one side of the latch 432 and rotates the other side of the latch 432 in a direction drawn out to the top.

The latch 432 may rotate based on the hinge 433 to move to be separated in an outer direction or folded in an inner direction based on the power connector 420.

Through the operation, as illustrated in FIG. 6, the grip portion 430 may be locked and fastened to the locking portion 512 configured so that the latch 430 drawn out to the upper surface based on the hinge 433 is extended to the circumference of the adapter jack 511 coupled to the power connector 420. However, the configuration fastened to the adaptor jack 511 through the grip portion 430 is one embodiment, and is not limited to such a configuration.

Meanwhile, the grip portion 430 may further include a second receiving portion 431 provided on the circumferential surface of the grip portion 430 in a groove shape in which the latch 432 may be received. When the grip portion 430 is folded in the inner direction, the grip portion 430 may protrude to the upper surface of the power supply unit 400 so as to be locked and fastened to the locking portion 512 configured to extend to the circumference of the adapter jack 511. However, when the grip portion 430 is separated in the outer direction, the grip portion 430 may be received inside the second receiving portion 431 so as not to protrude to the upper surface of the power supply unit 400.

Therefore, even if the power supply unit 400 is stacked by stacking the other power supply unit to the top, the interference due to the grip portion 430 may be minimized so that the power supply units 400 may be in close contact with each other on upper/lower surfaces to be stably stacked. It is easy to store and manage the plurality of power supply units 400.

Further, when the stacked power supply units 400 are in close contact with each other on upper/lower surfaces to be charged, only the power supply unit 400 located at the lowest end is directly connected to a power supply source and the remaining stacked power supply units 400 are simply configured to be electrically connected to each other through a contact surface so as to charge the plurality of power supply units 400 simultaneously.

The power supply unit 400 may be configured integrally with the pallet 100, but is not limited thereto and can be detached.

When the power supply unit 400 can be detached from the pallet 100, the power supply unit 400 may further include a handle portion 410 for separating the power supply unit 400 from the pallet 100. At this time, the handle portion 410 may be configured so as not to protrude to the upper surface of the power supply unit 400 so that the handle portions are in close contact with each other on the upper/lower surfaces to be stably stacked due to the same reason as the grip portion 430.

To this end, the handle portion 410 may include a handle provided in a loop form so that the user may carry or hold when the power supply unit 400 is separated or coupled, and a hinge which rotatably fixes the end of one side of the handle and rotates the other side of the handle in a direction drawn out to the top.

The handle may move to be laid down in the outer direction or folded in an upper direction by rotating based on the hinge.

Meanwhile, the handle portion 410 may further include a third receiving portion 411 provided on the circumferential surface of the handle portion in a groove shape in which the handle may be received. When the handle portion 410 is folded in the inner direction, the handle may protrude to the upper surface of the power supply unit 400. However, when the handle portion 410 is laid in the outer direction, the handle portion 410 may be received inside the third receiving portion 411 so that the handle does not protrude to the upper surface of the power supply unit 400.

Through such a configuration, as illustrated in FIG. 5, the carrying drone connected pallet according to the embodiment of the present invention may stably provide the power to the carrying drone 500 through the power supply unit 400 provided in the pallet 100 even during flight when carrying the goods 10 using the carrying drone 500. Particularly, the adapter jack 511 provided in the carrying drone 500 coupled with the power connector 420 of the power supply unit 400 is gripped by using the grip portion 430 to be prevented from being separated due to s flight speed and external environment factors during flight.

On the other hand, the fixing device between the connection member 310 and the support 200 will be described below in more detail with reference to the accompanying drawings.

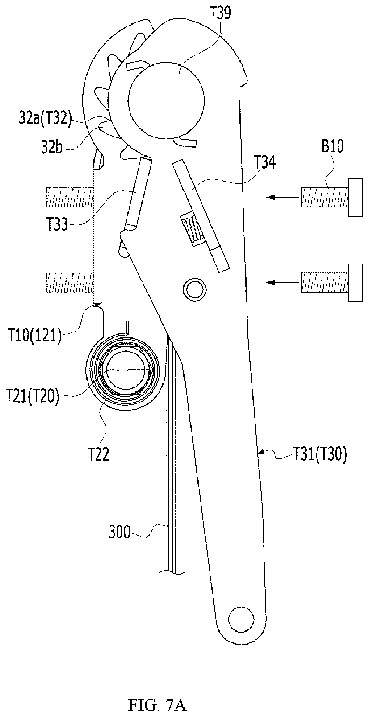

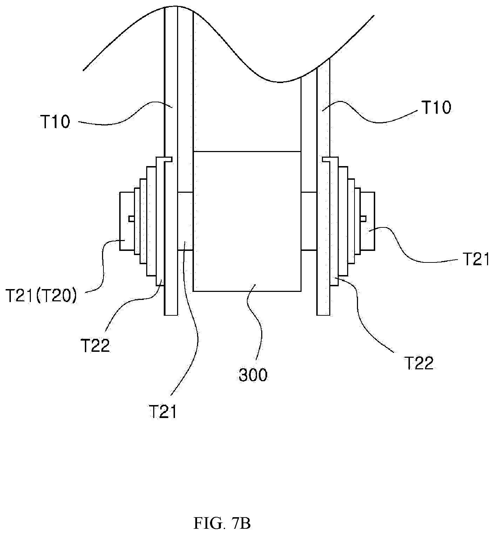

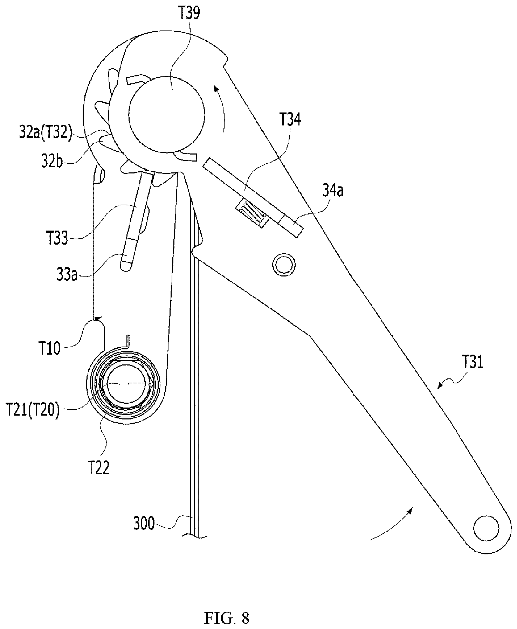

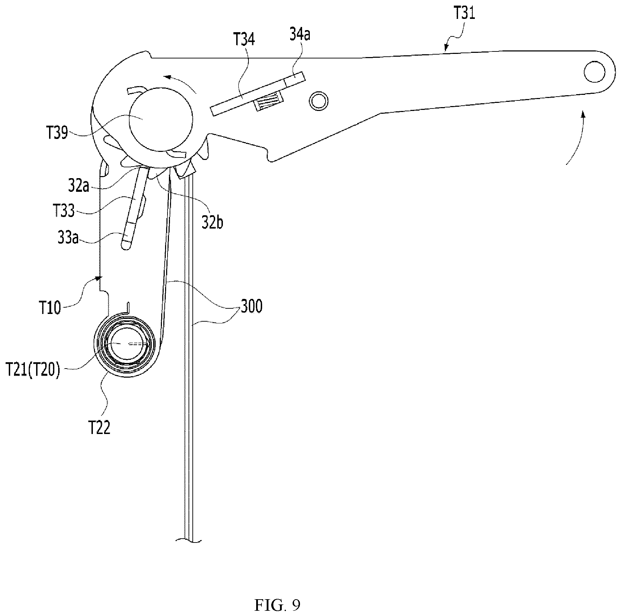

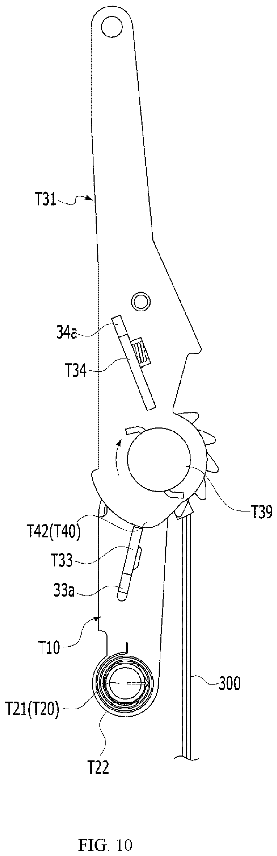

FIG. 7A is a diagram illustrating a connection port separated by releasing a bolt from the luggage fixing device between a connection member 310 and a support 200 in the carrying drone connected pallet of FIG. 1 and FIG. 7B is a diagram schematically illustrating an automatic winding unit of the luggage fixing device of FIG. 7A. FIG. 8 is a diagram schematically illustrating a state in which a roller member is rotated forward while the pressing member of FIG. 7A is rotated at about 45°C around the roller member, FIG. 9 is a diagram schematically illustrating a state in which the roller member is further rotated forward while the pressing member of FIG. 8 is further rotated around the roller member, and FIG. 10 is a diagram schematically illustrating a state in which the roller member can be rotated backward and the tension of a strap is released while the pressing member and the fixing member of FIG. 9 stop by a tension release unit.

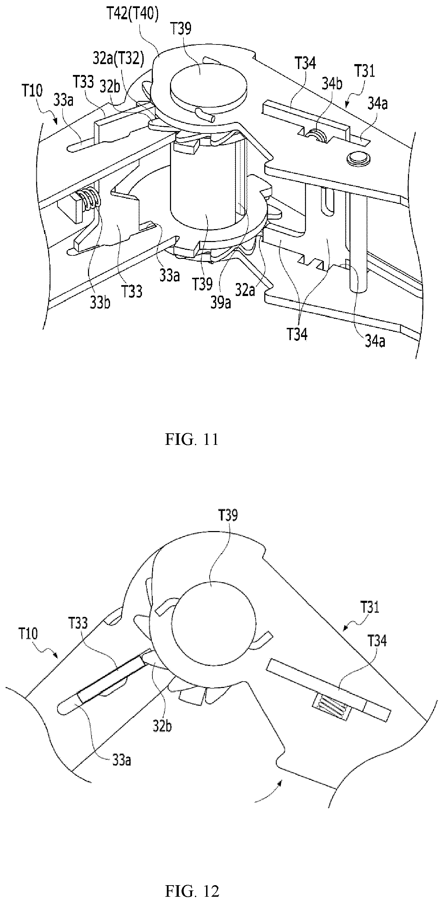

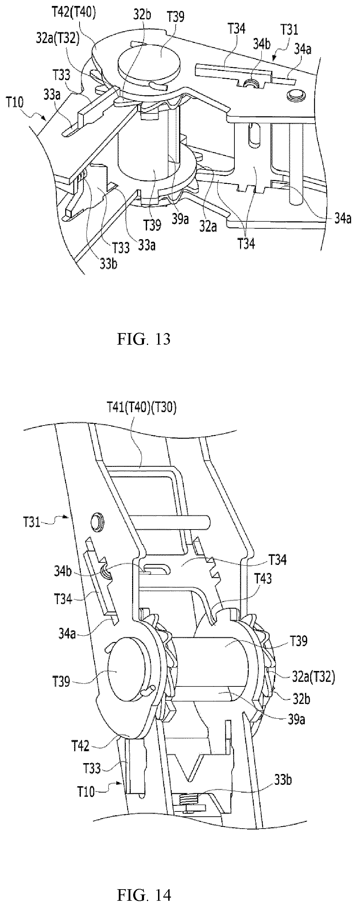

FIG. 11 is a diagram schematically illustrating a state in which a forward rotation allowable member is locked to any one backward locking groove and a state in which a forward rotation transmission member is locked to the other backward locking groove. FIG. 12 is a diagram schematically illustrating a state in which the forward rotation allowable member is retracted in an approximately longitudinal direction to a fixing member over a forward rotation guide protrusion while the pressing member is rotated forward while the forward rotation transmission member is locked to the backward locking groove. FIG. 13 is a diagram schematically illustrating a state in which the forward rotation transmission member is retracted in an approximately longitudinal direction to the pressing member over the forward rotation guide protrusion while the pressing member is rotated backward while the forward rotation allowable member is locked to the backward locking groove. FIG. 14 is a diagram schematically illustrating a state in which the forward rotation allowable member is retracted by a cam portion and the forward rotation transmission member is retracted and stopped by a stop portion to be separated from the backward locking groove so that the roller member is rotated backward to release the tension of a strap.

Hereinafter, the draw in/out portion 121 will be described in more detail with reference to FIGS. 7 to 14.

The draw in/out portion 121 may include a fixing member T10, an automatic winding unit T20, and a tension addition unit T30, as illustrated in FIGS. 7 to 14.

The fixing member T10 may be detachably fixed to the pallet 100 through a bolt B10 and the like. The automatic winding unit T20 may be provided at one end of the fixing member T10 and may have a mechanism for automatically winding the strap 300. The tension addition unit T30 may be provided at the other end of the fixing member T10 and may have a mechanism for adding the tension to the strap 300. Hereinafter, the automatic winding unit T20 and the rotational force addition unit T30 will be described in more detail with respect to FIGS. 7 to 14.

First, the automatic winding unit T20 may include a winding member T21 and a rotation restoring member T22, as illustrated in FIGS. 7 to 10. The winding member T21 may have a cylindrical shape to wind the strap 300 and may be rotatably provided at one end of the fixing member T10. One end of the rotation restoring member T22 may be fixed to the winding member T21 and the other end thereof may be fixed to the fixing member T10, and the rotation restoring member T22 may provide a rotation restoring force to be wound forward on the winding member T21 while the strap 300 is unwound backward from the winding member T21. For example, a recoil spring, and the like may be used as the rotation restoring member T22.

Accordingly, the tension provided to the strap 300 by the tension addition unit T30 is released by a tension release unit T40 to be described below and when the connection member 310 at the strap side is separated from the support plate 200, the strap 300 may be automatically wound on the winding member T21 by the rotation restoring force which has been latent in the rotation restoring member T22.

The tension addition unit T30 may apply the tension to the strap 300 by winding a certain amount of strap 300. Hereinafter, the tension addition unit T30 will be described in more detail with respect to FIGS. 7 to 14.

As illustrated in FIGS. 7 to 14, the tension addition unit T30 may include a roller member T39, a pressing member T31, a rotation member T32, a forward rotation allowable member T33, and a forward rotation transmission member T34.

As illustrated in FIG. 14, the roller member T39 may be rotatably provided at the other end of the fixing member T10 and have a through hole 39a through which the strap 300 passes. Accordingly, when the strap 300 passes through the through hole 39a, when the roller member T39 rotates, the strap 300 may be maintained in a tensioned state while a part of the strap 300 is wound on the roller member T39. When the roller member T39 is rotated in contrast by the tension release unit T40, the tension of the strap 300 may be released and the strap 300 may be movable through the through hole 39a.

As illustrated in FIGS. 7 to 10, the pressing member T31 may be rotatably provided on the fixing member T10 by rotating the roller member T39 as a rotary shaft. In particular, the pressing member T31 may be rotated forward (counterclockwise on the drawing) or backward (clockwise on the drawing) by being directly held by the user with a hand.

As illustrated in FIGS. 11 and 12, the rotation member T32 may rotate together with the roller member T39, and a plurality of backward locking grooves 32a for blocking the backward rotation of unwinding the strap 300 and a plurality of forward rotation guide protrusions 32b for guiding the forward rotation of winding the strap 300 may be provided on an outer circumference thereof to cross each other.

As illustrated in FIG. 11, the forward rotation allowable member T33 may be slidably provided on the fixing member T10 in a front and rear direction through a fixing-side long hole 33a and may be elastically supported to the fixing member T10 through a fixing-side elastic body 33b to be locked to any one of a plurality of backward locking grooves 32a. Particularly, as illustrated in FIG. 12, the forward rotation allowable member T33 is retracted over each forward rotation guide protrusion 32b while the pressing member T31 is rotated forward and may allow the forward rotation of the rotation member T32.

As illustrated in FIG. 11, the forward rotation transmission member T34 may be slidably provided on the pressing member T31 in a front and rear direction through a pressing-side long hole 34a and may be elastically supported to the pressing member T31 through a pressing-side elastic body 34b to be locked to any one of the plurality of backward locking grooves 32a. Particularly, as illustrated in FIG. 13, the forward rotation transmission member T34 may be retracted over each forward rotation guide protrusion 32b while rotating in a direction of decreasing an angle between the forward rotation transmission member T34 and the fixing member T10. In addition, as illustrated in FIG. 11, the forward rotation transmission member T34 may rotate the rotation member T32 forward so that the tension is added to the strap 300 while locked to any one backward locking groove 32a while rotating in a direction of increasing the angle between the forward rotation transmission member T34 and the fixing member T10.

Accordingly, while the roller member T39 is also rotated forward together while the rotation member T32 is rotated forward, the strap 300 may be partially wound on the roller member T39. Ultimately, as illustrated in FIG. 5, while the strap 300 is tensioned, the luggage 10 placed between the pallet 100 and the support plate 200 may be firmly fixed.

In addition, the draw in/out portion 121 may further include the tension release unit T40 as illustrated in FIGS. 10 and 14. The tension release unit T40 allows the rotation of the rotation member T32 in the reverse direction of unwinding the strap 300 to move the strap 300 from the through hole 39a of the roller member T39.

For example, the tension release unit T40 may include a pulling member T41, a cam portion T42, and a stop portion T43, as illustrated in FIGS. 10 and 14. The pulling member T41 is provided in the forward rotation transmission member T34 and may pull the forward rotation transmission member T34 rearward to be separated from the backward locking groove 32a. The pulling member T41 may be directly pulled by the user with a hand.

The cam portion T42 may be provided in the pressing member T31 and may push the forward rotation allowable member T33 to be retracted so that an angle between the fixing member T10 and the pressing member T31 is close to a first angle (approximately 180°). The stop portion T43 may be provided in the fixing member T10 and retract the forward rotation transmission member T34 and then stop the movement when the angle between the fixing member T10 and the pressing member T31 reaches the first angle (approximately 180°) while pulling the puling member T41. Furthermore, the first angle may be set so that the pressing member T31 is maximally separated from the fixing member T10.

Accordingly, the tensioned strap 300 is loosed by rotating the rotation member T32 backward to easily separate the strap-side connection member 310 from the support plate 200 and the strap 300 may be automatically wound on the winding member T21 while the strap 300 is smoothly moved through the through hole 39a of the roller member T39.

In order to understand the disclosed embodiments, reference numerals are given in the preferred embodiments shown in the drawings.

In addition, the connection or connection members of the lines between the components illustrated in the drawings exemplarily represent functional connections and/or physical connections, and in an actual device, may be illustrated as various functional connections, physical connections, or circuit connections that can be replaced or added. In addition, unless there is a specific reference such as "essential", "important", etc., it may not be an essential component for application of the disclosed embodiment. It will be understood to those skilled in the art that various embodiments may be made without departing from the scope of the invention as defined by the appended claims.

**Explanation of Reference Numerals and Symbols**

| | | | |
|---|---|---|---|
| 10: | Goods | 100: | pallet |
| 110, 210, 220: | Insertion hole | 120: | Connection port |
| 121: | Draw in/out portion | 130: | Fastening port |
| 131: | First receiving portion | 200: | Support plate |
| 211: | Fixing port | 300: | Strap |
| 310: | Connection member | 400: | Power supply unit |
| 410: | Handle portion | 411: | Third receiving portion |
| 420: | Power connector | 430: | Grip portion |
| 431: | Second receiving portion | 432: | Latch |
| 433: | Hinge | 500: | Carrying drone |
| 510: | Power cable | 511: | Adapter jack |
| 512: | Locking portion | 520: | Wire |
| 521: | Buckle | T3: | Position restoring member |
| T4: | Stop portion | T10: | Fixing member |
| T20: | Roller member | T30: | Tension addition unit |
| T40: | Tension release unit | | |

## Claims

1. An assembly consisting of a support plate (200) and a pallet connectable to a carrying drone, the pallet comprising:
a strap (300);
a body part which is adapted to press and support goods (10) loaded on the support plate (200) from the top, connect and fix the goods (10) with the support plate (200) up and down through the strap (300), and has a fastening port (130) fastenable to the carrying drone (500); and
a power supply unit (400) which is embedded in a partial region of the body part to provide power to the carrying drone (500) connected to a power cable (510), wherein the body part comprises
a fork insertion hole (110) which is provided on the circumferential surface of the body part so that a fork of a forklift can be inserted,
a connection port (120) which is adapted to connect and fix the support plate (200) using the strap (300),
a fastening port (130) in which at least two fastening ports are provided on one side of the body part to be fastened to the carrying drone (500), and
a first receiving portion (131) provided on a circumferential surface of the fastening port (130) in a groove shape in which the fastening port (130) is adapted to be received.

2. The assembly according to claim 1, wherein the power supply unit (400) comprises
a power connector (420) to which an adaptor jack (511) of the power cable (510) electrically or mechanically connected with the carrying drone (500) can be inserted,
a grip portion (430) which is fixed rotatably to a peripheral portion of the power connector (420) to grip the adapter jack (511) connected to the power connector (420), and
a second receiving portion (431) which is provided on the circumferential surface of the grip portion (430) in a groove shape in which a latch (432) of the grip portion (430) may be received.

3. The assembly according to claim 2, wherein the grip portion (430) comprises
at least one latch (432) having a 'L' shape at positions facing each other based on the power connector (420), and
a hinge (433) which is adapted to rotatably fix one side of the latch (432) and rotate the other side of the latch (432) in a direction drawn out to the top.

4. The assembly according to claim 1, wherein the power supply unit (400) includes a secondary battery including a lead-acid battery and a lithium-ion battery or a fuel cell including a hydrogen fuel cell.

## Patentansprüche

1. Baugruppe, bestehend aus einer Trägerplatte (200) und einer Palette, die mit einer Transportdrohne verbunden werden kann, wobei die Palette einen Gurt (300), ein Gehäuseteil, das geeignet ist, von oben auf die Trägerplatte (200) geladene Güter (10) aufzudrücken und zu halten, die Güter (10) mit der Trägerplatte (200) nach oben und unten durch den Gurt (300) zu verbinden und zu fixieren, und eine Befestigungsschelle (130) aufweist, die an die Transportdrohne (500) geschnallt werden kann und einer Stromversorgungseinheit (400), die in einem Teilbereich des Gehäuseteils eingebettet ist, um die mit einem Stromkabel (510) verbundene Transportdrohne (500) mit Strom zu versorgen umfasst. Das Gehäuseteil weist dabei folgendes auf: Eine Öffnung an der Umfangsfläche, in die die Gabel eines Gabelstaplers eingeführt werden kann, ferner eine Verbindungsschelle (120), die geeignet ist, die Trägerplatte (200) unter Verwendung des Gurtes (300) zu schnallen und zu befestigen, eine Befestigungsschelle (130), in der mindestens zwei Befestigungsschellen auf einer Seite des Gehäuseteils vorgesehen sind, um an der Tragetrommel (500) befestigt zu werden, und einen ersten Aufnahmeabschnitt (131), der sich auf einer Umfangsfläche der Befestigungsschelle (130) befindet und ein Rille aufweist, in die die Befestigungsschelle (130) passend aufgenommen wird.

2. Baugruppe nach Patentanspruch 1, wobei die Stromversorgungseinheit (400) einen Stromanschluss (420) beinhaltet, in den eine Adapterbuchse (511) des Stromkabels (510), das elektrisch oder mechanisch mit der Transportdrohne (500) verbunden ist, eingeführt werden kann, ferner einen Griff (430), der drehbar an einer äußeren Stelle des Stromanschlusses (420) befestigt ist, um die mit dem Stromanschluss (420) verbundene Adapterbuchse (511) zu greifen, und einen zweiten Aufnahmeabschnitt (431) durch eine Rille an der Umfangsfläche des Griffes (430), die eine Lasche (432) des Griffes (430) aufnehmen kann.

3. Baugruppe nach Patentanspruch 2, wobei der Griff (430) mindestens eine Lasche (432) in "L"-Form an einander zugewandten Positionen anhand des Stromanschlusses (420) und ein Scharnier (433) umfasst, das so beschaffen ist, dass es eine Seite der Lasche (432) drehbar fixiert und die andere Seite der Lasche (432) in einer nach oben verlängerten Richtung dreht.

4. Baugruppe nach Patentanspruch 1, wobei die Stromversorgungseinheit (400) eine Sekundärbatterie einschließlich einer Bleisäurebatterie und einer Lithium-Ionen-Batterie oder eine Brennstoffzelle einschließlich einer Wasserstoff-Brennstoffzelle enthält.

## Revendications

1. Ensemble constitué d'une plaque de support (200) et d'une palette pouvant être relié à un drone de transport, la palette comprenant : une sangle (300) ; une partie de corps qui est conçue pour presser et supporter des marchandises (10) chargées sur la plaque de support (200) depuis la partie supérieure, relier et attacher les marchandises (10) à la plaque de support (200) en haut et en bas par l'intermédiaire de la sangle (300), et a un orifice de fixation (130) pouvant être fixé au drone de transport (500) ; et
une unité d'alimentation (400) qui est intégrée dans une région partielle de la partie de corps pour fournir une alimentation au drone de transport (500) connecté à un câble d'alimentation (510), dans lequel la partie de corps comprend
un trou d'insertion de fourche (110) qui est fourni sur la surface circonférentielle de la partie de corps de sorte qu'une fourche d'un chariot élévateur peut être insérée,
un orifice de liaison (120) qui est conçu pour relier et attacher la plaque de support (200) à l'aide de la sangle (300),
un orifice de fixation (130) dans lequel au moins deux orifices de fixation sont fournis sur un côté de la partie de corps à fixer au drone de transport (500), et
une première partie de réception (131) fournie sur une surface circonférentielle de l'orifice de fixation (130) sous une forme de rainure dans laquelle l'orifice de fixation (130) est conçu pour être reçu.

2. Ensemble selon la revendication 1, dans lequel l'unité d'alimentation d'alimentation (400) comprend
un connecteur d'alimentation (420) auquel une prise d'adaptateur (511) du câble d'alimentation (510) connecté électriquement ou mécaniquement au drone de transport (500) peut être insérée,
une partie de préhension (430) qui est attachée de manière rotative à une portion périphérique du connecteur d'alimentation (420) pour saisir la prise d'adaptateur (511) connectée au connecteur d'alimentation (420), et
une seconde partie de réception (431) qui est fournie sur la surface circonférentielle de la partie de préhension (430) sous une forme de rainure dans laquelle un verrou (432) de la partie de préhension (430) peut être reçu.

3. Ensemble selon la revendication 2, dans lequel la partie de préhension (430) comprend
au moins un verrou (432) ayant une forme de « L » au niveau de positions l'une en face de l'autre en fonction du connecteur d'alimentation (420), et
une charnière (433) qui est conçue pour attacher de manière rotative un côté du verrou (432) et mettre en rotation l'autre côté du verrou (432) dans une direction tirée vers le haut.

4. Ensemble selon la revendication 1, dans lequel l'unité d'alimentation (400) comporte une batterie secondaire comportant une batterie au plomb-acide et une batterie au lithium-ion ou une pile à combustible comportant une pile à combustible à hydrogène.
